# EUROPÄISCHE PATENTANMELDUNG

(11) **EP 1 136 324 A2**
(43) Veröffentlichungstag der Anmeldung: **26.09.2001**
(21) Anmeldenummer: 01106580.2
(22) Anmeldetag: 15.03.2001
(51) Int. Cl.: B60R 9/04

(54) **Verfahren zum Herstellen einer Tragstruktur**

(30) Priorität: 22.03.2000 DE 10009058
(71) Anmelder: Bayerische Motoren Werke Aktiengesellschaft, 80809 München (DE); EMS-Chemie AG, 7013 Domat/Ems (CH); IBS Brocke GmbH, Kunststoffverarbeitung, 51589 Morsbach (Lichtenberg) (DE)
(72) Erfinder: Specker, Olaf, Dr., 80804 München (DE); Hagn, Bruno, 80995 München (DE); Siegel, Wolfgang, 7023 Haldenstein (CH); Eiteneuer, Klaus, 51580 Reichshof (DE)
(74) Vertreter: Becker Kurig Straus

(57) **Zusammenfassung**

Vorgestellt wird ein Verfahren zum Herstellen einer Tragstruktur, insbesondere einer Reling für einen Kraftfahrzeug-Dachgepäckträger, als einstückiges Kunststoff-Formteil unter Verwendung einer der Außenkontur der Tragstruktur entsprechenden Formkavität, durch welches erfindungsgemäß für den Fall eines überlast-, z.B. unfallbedingten Auseinanderbrechens des Kunststoffkörpers auf fertigungstechnisch einfache Weise eine unkontrollierte Desintegration der Tragstruktur dadurch mit Sicherheit verhindert wird, dass vor dem Kunststofffüllvorgang eine die Krafteinleitungsstellen der Tragstruktur miteinander verbindenden Sicherungsbrücke an der Formkavität endseitig fixiert und beim nachfolgenden Befüllvorgang über die gesamte Länge eigenstabil im Abstand zu der Formfläche der Formkavität gehalten und vom Kunststoffmaterial umschlossen wird.

## Beschreibung

Die Erfindung bezieht sich auf ein Verfahren zum Herstellen einer Tragstruktur, insbesondere einer Reling für einen Kraftfahrzeug-Dachgepäckträger, nach dem Oberbegriff des Patentanspruchs 1.

Aus der DE 197 32 288 A1 ist ein Verfahren dieser Art bekannt, wonach die Reling eines Kraftfahrzeug-Dachgepäckträgers einschließlich der am Fahrzeugdach befestigten Stützfüße im Wege einer kombinierten Spritzgieß- und Gasinjektionstechnik als einstückiger Kunststoff-Hohlkörper, etwa aus Polyamid, hergestellt wird, um dadurch optisch störende Gusslinien oder Trennfugen zu vermeiden und eine gewichtssparende, rationelle Fertigung der Dachreling zu erreichen. Dabei besteht jedoch im Überlastungs- oder Crashfall die Gefahr, dass die Dachreling in einzelne Teilstücke auseinanderbricht, die sich dann unkontrolliert vom Kraftfahrzeug lösen, was aus Sicherheitsgründen nicht hinnehmbar ist.

Ferner ist es in Verbindung mit einem kombinierten Spritzgieß- und Gasinjektionsverfahren zur Herstellung von Formschläuchen für flüssige oder gasförmige Medien bekannt, drapierbare Verstärkungsgeflechte in die Formkavität einzulegen, die dann beim anschließenden Befüllvorgang in die Kunststoffmasse eingebettet werden. Damit das Verstärkungsgeflecht positionsgenau in den Formschlauch eingelagert wird, muss es während des Befüll- und Gasinjektionsvorgangs im Abstand zu den Formflächen der Formkavität aufgespannt werden. Eine solche Geflechtfixierung ist bei Hohlkörpern mit gekrümmtem Innenraum, wenn überhaupt, nur mit hohem Fertigungsaufwand, etwa mit Hilfe von nachträglich entfernbaren Formkernen oder Abstandhaltern, möglich.

Aufgabe der Erfindung ist es, das Verfahren der eingangs genannten Art so zu gestalten, dass bei einem Bruch der Tragstruktur der Gefahr eines unkontrollierten Ablösens einzelner Teilstücke der Tragstruktur auf fertigungsmäßig einfache Weise wirksam begegnet wird.

Diese Aufgabe wird erfindungsgemäß durch das im Patentanspruch 1 gekennzeichnete Verfahren gelöst.

Erfindungsgemäß wird durch die Einlagerung einer eigenstabilen, an den Lasteinleitungsstellen befestigten Verstärkungsbrücke nicht nur die Lastfestigkeit der Tragstruktur deutlich erhöht, sondern vor allem sichergestellt, dass bei einem Bruch des Kunststoffmaterials die einzelnen Teilstücke über die Verstärkungsbrücke miteinander und mit den Lasteinleitungsstellen verbunden bleiben, so dass das Risiko einer unkontrollierten Desintegration der Tragstruktur und damit das Schadens- und Verletzungsrisiko im Versagensfall signifikant verringert werden, mit dem weiteren, fertigungstechnisch wesentlichen Effekt, dass die Verstärkungsbrücke beim Kunststofffüllvorgang lediglich endseitig fixiert werden muss, ohne dass es zur exakten Positionierung der Verstärkungsbrücke gesonderter Formkerne, Stechdorne oder Abstandhalter bedarf, die in aufwendiger Weise in der Formkavität positioniert und nachträglich entfernt werden müssen. Hierdurch wird der Fertigungsprozess vor allem für für stärker oder unregelmäßig gebogene Tragstrukturen erheblich vereinfacht.

Aus Gewichtsgründen empfiehlt es sich, die Verstärkungsbrücke nach Anspruch 2 als textile, durch ein Bindemittel formstabilisierte Faserstruktur oder nach Anspruch 3 aus einem entsprechend vorgeformten Drahtgewebe oder -geflecht anzufertigen. Im Hinblick auf eine erhöhte Lastsicherheit wird nach Anspruch 4 hingegen als Verstärkungsbrücke vorzugsweise ein beidseitig unter Freihaltung eines kunststoffbefüllten Spalts von der Formfläche der Kavität beabstandetes Metallband verwendet.

Eine weitere fertigungstechnische Vereinfachung bei zugleich hoher Maßgenauigkeit und Oberflächenqualität wird nach Anspruch 5 vorzugsweise dadurch erzielt, dass das Kunststoffmaterial im Wege des Spritzgießverfahrens in die Formkavität eingebracht wird, und zwar nach Anspruch 6 in besonders bevorzugter, gewichtssparender Weise im Wege eines kombinierten Spritzgieß- und Gasinjektionsprozesses, wobei die Tragstruktur als Hohlträger mit innenliegender Verstärkungsbrücke ausgebildet wird. In Verbindung mit einer streifenförmigen Verstärkungsbrücke, also etwa dem Metallband nach Anspruch 4, wird hierdurch bei der Gasinjektion ein Mehrkammersystem mit der Verstärkungsbrücke als Zwischensteg gebildet und somit die konstruktive Festigkeit und Steifigkeit der Tragstruktur deutlich verbessert.

Im Hinblick auf eine rationelle Fertigung bei zugleich hoher Materialfestigkeit wird nach Anspruch 7 als Kunststoffmaterial vorzugsweise ein faserverstärkter Thermoplast eingesetzt, und zwar nach Anspruch 8 zweckmäßigerweise ein Polymer aus der Gruppe der Polyamide und Copolyamide mit einem Schmelzpunkt von mindestens 240°C, vorzugsweise 300 bis 350°C. Dabei werden nach Anspruch 9 insbesondere teilkristalline, teilaromatische Copolyamide verwendet, die sich besonders durch ihre hohe Temperaturbeständigkeit und Chemikalienbeständigkeit auszeichnen. In besonders bevorzugter Weise enthalten derartige Copolyamide, wie z.B. Polyamid 6T/6I, 30 bis 60 Gew.-% Glasfasern. Nach Anspruch 10 schließlich enthalten diese Copolyamide als Komponenten wiederkehrende Einheiten, die sich von Terephthalsäure, Isophthalsäure und Hexamethylendiamin ableiten. Neben den Einheiten, die sich von Terephthalsäure/Isophthalsäure und Hexamethyldiamin ableiten, können die teilaromatischen Copolyamide Einheiten enthalten, die sich von ε-Caprolactan ableiten und/oder Einheiten enthalten, die sich von Adipinsäure und Hexamethylendiamin ableiten. Beispiele für derartige (Co-)Polyamide (PA) sind PA 46, PA 66, PA 6T/6I, PA 6T/66, PA 6T/6, PA 6T/6I/66.

In einer ganz besonders bevorzugten Ausführungsform wird ein spezielles Hochtemperatur-Polyamid mit 50 Gew.-% Glasfasern, d.h., ein verstärktes teilaromatisches, teilkristallines Copolyamid vom Typ PA 6T/6I mit einem Schmelzpunkt von 325°C verwendet. Durch Einsatz dieses Materials wird ein äußerst steifes, festes, warmbeständiges und maßgenaues Kunststoff-Formteil mit ausgezeichneter Chemikalienbeständigkeit erzeugt.

Weitere Merkmale der Erfindung ergeben sich aus der nachfolgenden, beispielsweisen Beschreibung in Verbindung mit den Zeichnungen. Diese zeigen in stark schematisierter Darstellung:
- Fig. 1: eine erfindungsgemäß hergestellte Tragstruktur in Form einer Kraftfahrzeug-Dachreling;
- Fig. 2: die Dachreling im Bereich eines endseitigen Stützfußes im Längsschnitt;
- Fig. 3: die Dachreling im Bereich eines endseitigen Stützfußes im Querschnitt; und
- Fig. 4: einen Schnitt längs der Linie IV-IV der Fig. 1.

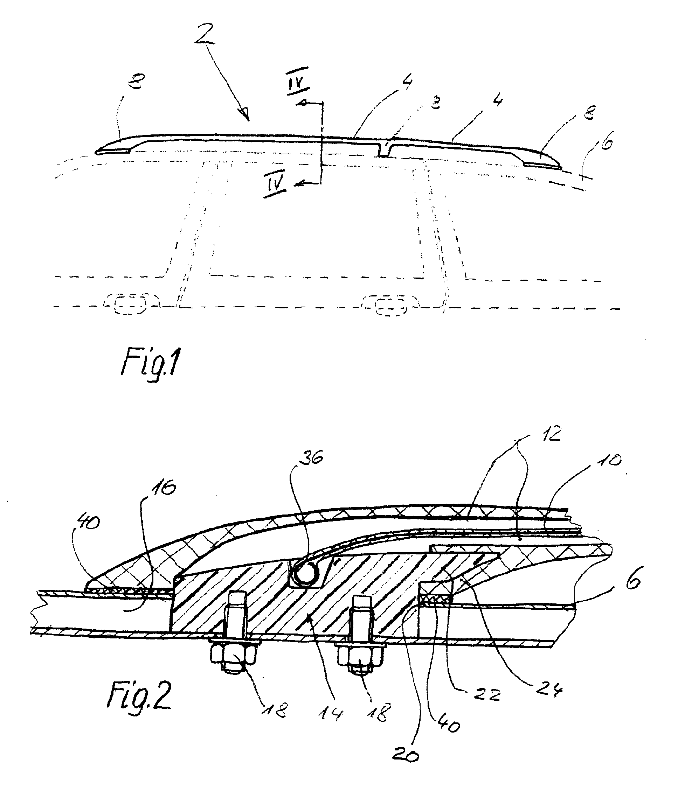

Fig. 1 zeigt in der Seitenansicht einen Hohlträger 2 in Form einer gebogenen Dachreling für einen Kraftfahrzeug-Gepäckträger, welche als einteiliges Kunststoff-Formteil, bestehend aus den Tragrohrabschnitten 4 und den an diesen angeformten, lösbar am Fahrzeugdach 6 befestigten Stützfüßen 8, ausgebildet ist. Hergestellt wird die Reling 2 einschließlich der Tragrohrabschnitte 4 und der Stützfüße 8 auf die weiter unten beschriebene Weise als Mehrkammerprofil im Wege eines kombinierten Spritzgieß- und Gasinjektionsverfahrens.

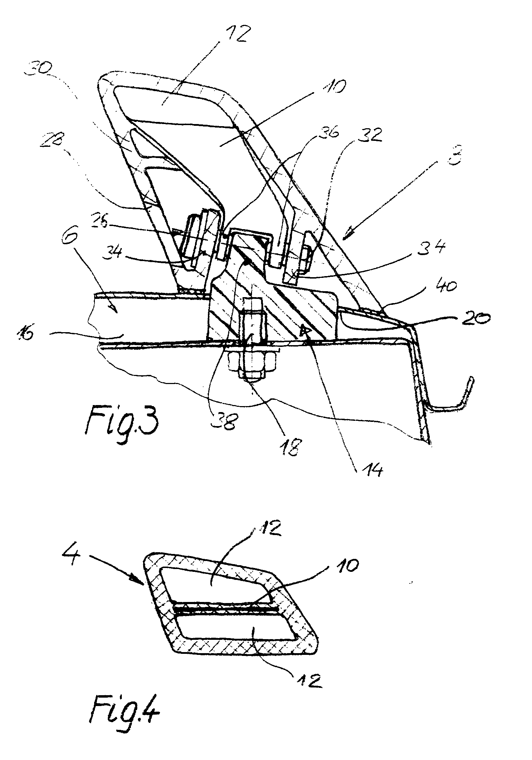

Im Inneren der Reling 2 befindet sich ein metallisches Sicherungsband 10, welches sich als Verstärkungsbrücke durchgehend von Stützfuß zu Stützfuß 8 erstreckt und einen mittleren Zwischensteg zwischen den Hohlkammern 12 der Reling 2 bildet. Wie am deutlichsten aus den Fig. 2 und 3 ersichtlich, ist das Verstärkungs-/Sicherungsband 10 an den Enden gemeinsam mit dem zugehörigen Stützfuß 8 jeweils über ein Verbindungsteil 14 an einer an den Dachseitenrahmen anschließenden Längsnut oder dem Dachlängsträger 16 des Fahrzeugdachs befestigt. Am Verbindungsteil 14, welches ebenfalls aus Kunststoff vorgefertigt und über z.B. eingegossene Stehbolzen 18 mit dem Dachlängsträger 16 im Bereich einer Aussparung 20 permanent verschraubt ist, ist die Reling 2 einerseits mittels einer mit einer entsprechenden Einschubnase 22 des Verbindungsteils 14 zusammenwirkenden Aufnahmetasche 24 formschlüssig und andererseits über eine Schraubverbindung 26 kraftschlüssig lösbar verankert. Die Schraubverbindung 26 besteht aus einem über eine Aufnahmeöffnung 28 (Fig. 3) in dem der Fahrzeugmitte zugekehrten, schräg geneigten Wandabschnitt 30 des jeweiligen Stützfußes 8 zugänglichen Schraubbolzen 32, durch den der Stützfuß 8 über einstückig angeformte Halteflansche 34 sowie das Sicherungsband 10 über hülsenförmig umgebogene Endabschnitte 36 an einem hochstehenden Befestigungsabschnitt 38 des Verbindungsteils 14 gesichert werden. Die Mittelachse des Schraubbolzens 32 ist gegenüber der Dachkontur derart schräg geneigt, dass die Stützfüße 8 - jeweils unter Zwischenlage einer Gummidichtung 40 - beim Festziehen der Schraubbolzen 32 dichtend an das Fahrzeugdach 6 angepresst werden.

Zur Herstellung der Dachreling 2 wird zunächst ein entsprechend vorgebogenes Metallband 10 in die der Außenkontur der Reling 2 formgleiche Kavität eines Spritzgießwerkzeugs eingelegt und in dieser an den Endabschnitten 36 derart fixiert, dass das Metallband 10 über seine gesamte Länge von den Formflächen der Kavität auf Abstand gehalten ist. Anschließend wird die Formkavität von dem einen Ende aus beidseitig des Metallbandes 10 mit einer thermoplastischen, kurzfaserverstärkten Kunststoffschmelze befüllt. Sobald sich diese in den an die Formflächen der Formkavität und an das Metallband angrenzenden Randzonen konsolidiert hat, beginnt die Druckgasinjektion, durch die die noch schmelzflüssige Kunststoffmasse aus dem Inneren des Formteils herausgedrückt wird, woraufhin die Reling 2 als Mehrkammersystem mit innenliegendem Sicherungsband 10 fertiggestellt ist und entformt werden kann.

Als Spritzgießmasse für die Reling 2 wird ein Hochtemperatur-Polyamid mit 50 Gew.-% Glasfasern bevorzugt, und zwar ein verstärktes teilaromatisches, teilkristallines Copolyamid vom Typ PA 6T/6I mit einem Schmelzpunkt von 325°C, das unter dem Handelsnamen Grivory® HTV-5 H1 der Firma EMS-Chemie AG, Schweiz, erhältlich ist. Hierdurch wird auf die oben beschriebene Weise ein äußerst festes, wärmebeständiges und glattflächiges Mehrkammer-Kunststoff-Formteil mit ausgezeichneter Chemikalienbeständigkeit erzeugt.

## Patentansprüche

1. Verfahren zum Herstellen einer Tragstruktur, insbesondere einer Reling für einen Kraftfahrzeug-Dachgepäckträger, als einstückiges Kunststoff-Formteil unter Verwendung einer der Außenkontur der Tragstruktur entsprechenden Formkavität, **dadurch gekennzeichnet, dass**
vor dem Kunststofffüllvorgang eine die Krafteinleitungsstellen der Tragstruktur miteinander verbindende Verstärkungsbrücke an der Formkavität endseitig fixiert und beim nachfolgenden Befüllvorgang über die gesamte Länge eigenstabil im Abstand zu der Formfläche der Formkavität gehalten und vom Kunststoffmaterial umschlossen wird.

2. Verfahren nach Anspruch 1, **dadurch gekennzeichnet, dass**
die Verstärkungsbrücke als textile, durch Bindemittel formstabilisierte Faserstruktur ausgebildet wird.

3. Verfahren nach Anspruch 1, **dadurch gekennzeichnet, dass**
die Verstärkungsbrücke aus einem Drahtgewebe oder -geflecht hergestellt wird.

4. Verfahren nach Anspruch 1, **dadurch gekennzeichnet, dass**
als Verstärkungsbrücke ein beidseitig unter Freihaltung eines kunststoffbefüllten Spalts von der Formfläche der Kavität beabstandetes Metallband vorgesehen wird.

5. Verfahren nach einem der vorhergehenden Ansprüche, **dadurch gekennzeichnet, dass**
das Kunststoffmaterial im Wege des Spritzgießverfahrens in die Formkavität eingebracht wird.

6. Verfahren nach Anspruch 5, **dadurch gekennzeichnet, dass**
die Tragstruktur im Wege eines kombinierten Spritzgieß- und Gasinjektionsprozesses als Hohlträger mit innenliegender Verstärkungsbrücke ausgebildet wird.

7. Verfahren nach einem der vorhergehenden Ansprüche, **dadurch gekennzeichnet, dass**
als Kunststoffmaterial ein faserverstärkter Thermoplast verwendet wird.

8. Verfahren nach Anspruch 7, **dadurch gekennzeichnet, dass**
als faserverstärkter Thermoplast ein Polymer aus der Gruppe der Polyamide und Copolyamide mit einem Schmelzpunkt von mindestens 240°C, vorzugsweise 300 bis 350°C, eingesetzt wird.

9. Verfahren nach Anspruch 7 oder 8, **dadurch gekennzeichnet, dass**
man teilkristalline, teilaromatische Copolyamide verwendet, die im wesentlichen aus wiederkehrenden Einheiten aufgebaut sind, die sich ableiten von einem Dicarbonsäuremonomeren, einem Diaminmonomeren oder einem Aminosäuremonomeren oder einer Mischung aus zwei oder mehreren hiervon.

10. Verfahren nach Anspruch 9, **dadurch gekennzeichnet, dass**
das Polyamid ein Polykondensationsprodukt von einem dibasischen Säuremonomeren aus Terephthalsäure und Isophthalsäure und einem Alkylendiaminmonomeren mit 4 bis 25 Kohlenstoffatomen, insbesondere Hexamethylendiamin, ist.
